# EUROPÄISCHE PATENTSCHRIFT

(11) **EP 0 390 942 B1**
(45) Veröffentlichungstag und Bekanntmachung des Hinweises auf die Patenterteilung: **03.02.1993**
(21) Anmeldenummer: 89105780.4
(22) Anmeldetag: 01.04.1989
(51) Int. Cl.: G01N 1/24

(54) **Einrichtung zum Messen der Staubemission in Kanälen mit aggressiven Stäuben, insbesondere Schornsteinen**
Device for measuring the dust emission in ducts carrying hazardous dust, particularly chimneys
Système de mesure de l'émission de poussière dans les conduites contenant des poussières dangereuses, en particulier dans les cheminées

(43) Veröffentlichungstag der Anmeldung: 10.10.1990
(73) Patentinhaber: FAG KUGELFISCHER GEORG SCHÄFER Kommanditgesellschaft auf Aktien, 97419 Schweinfurt (DE)
(72) Erfinder: Wendt, Horst, D-8520 Erlangen (DE)
(74) Vertreter: Rehmann, Klaus H.

(56) Entgegenhaltungen:
- DE-A- 2 032 127
- US-A- 3 744 297
- US-A- 3 859 842
- STAUB-REINHALTUNG DER LUFT, Band 43, Nr. 7, Juli 1983, Seiten 277-284, Seyer/Rhein, DE; U. DÜWEL et al.: "Neuartige Probenahmeeinrichtung zur Staubkonzentrationsmessung in Reingasen von Grossfeuerungsanlagen zum Zwecke der Bestimmung anorganischer und organischer Staubinhaltsstoffe"
- STAUB-REINHALTUNG DER LUFT, Band 42, Nr. 2, Februar 1982, Seiten 43-47, Speyer/Rhein, DE; F. SPORENBERG et al.: "Untersuchungen zur Abscheidung von Stäuben mit Schüttschichtfiltern"

## Beschreibung

Die Erfindung betrifft eine Einrichtung zum Messen der Staubemission in Kanälen mit aggressiven Stäuben, insbesondere Schornsteinen, bei weicher eine geschwindigkeitsgleiche oder isokinetische Entnahme eines Teilgasstromes erfolgt und der Teilgasstrom mit Frischluft gemischt einem Auswertefilter zugeführt wird. Einrichtungen dieser Art sind aus den deutschen Patenten 20 32 127 und 22 37 736 bekannt.

Die bekannten Einrichtungen weisen eine Reihe von Nachteilen auf. So verschmutzen die Drosselstellen sehr schnell und auf den Achsen der pneumatischen Regler bilden sich während des Betriebes Ablagerungen. Damit entsteht ein sehr hoher Wartungsaufwand, der mit einem Ausfall der Meßgeräte verbunden ist, da während der Wartung das Gerät nicht zum Messen eingesetzt werden kann. Dies bedeutet, daß bei Müllverbrennungsanlagen, die ohne Messung nicht betrieben werden dürfen, diese für den Zeitraum der Wartung stillgelegt werden müssen. Weiterhin besteht bei den bekannten Einrichtungen Vereisungsgefahr der Meßblenden, wenn die Außentemperaturen um den Gefrierpunkt schwanken. Durch den hohen Wartungsaufwand liegt der Verfügbarkeitsprozentsatz dieser Einrichtungen unter 90. Ferner haben diese Einrichtungen ein träges Regelverhalten.

In der Zeitschrift "Staub-Reinhaltung der Luft" Vol. 43 (1983) Juli, No. 7, Speyer/Rhein, Deutschland, Seite 277-284 von Uwe Düwei und Walter Dannecker, wird unter dem Titel: "Neuartige Probenahmeeinrichtung zur Staubkonzentrationsmessung in Reingasen von Großfeuerungsanlagen zum Zwecke der Bestimmung anorganischer und organischer Staubinhaltsstoffe"; eine Probeentnahmevorrichtung, bestehend aus einem Absaugrohr mit einer an dessen Ende angebrachten Filterhalterung, beschrieben, bei welcher die aggressiven Gasmengen direkt geregelt werden müssen.

Es ist Aufgabe der vorliegenden Erfindung eine Einrichtung zu schaffen, deren Verfügbarkeitsprozentsatz über 95 liegt.

Die Aufgabe wird erfindungsgemäß durch die Merkmale des Anspruches 1 gelöst.

In weiterer Ausgestaltung des Erfindungsgedankens hat es sich als vorteilhaft erwiesen, daß die im Kanal jeweils herrschende Gasströmgeschwindigkeit über die an einem als Analogverstärker ausgebildeten Differenzdruckmesser angeschlossenen Pitotrohre auf einen an sich bekannten Rechner als Abluftmengenwert in Kubikmetern anzeigbar bzw. registrierbar weitergeleitet wird und daß gleichzeitig das Gewicht, des auf dem Auswertefilter angesammelten Staubes durch Massenbestimmung erhalten und dieser Meßwert dem Rechner zur Anzeige oder Registrierung in Milligramm zugeführt wird, so daß an dem Rechner der Wert der Emission in Milligramm pro Kubikmeter abgelesen bzw. registriert werden kann.

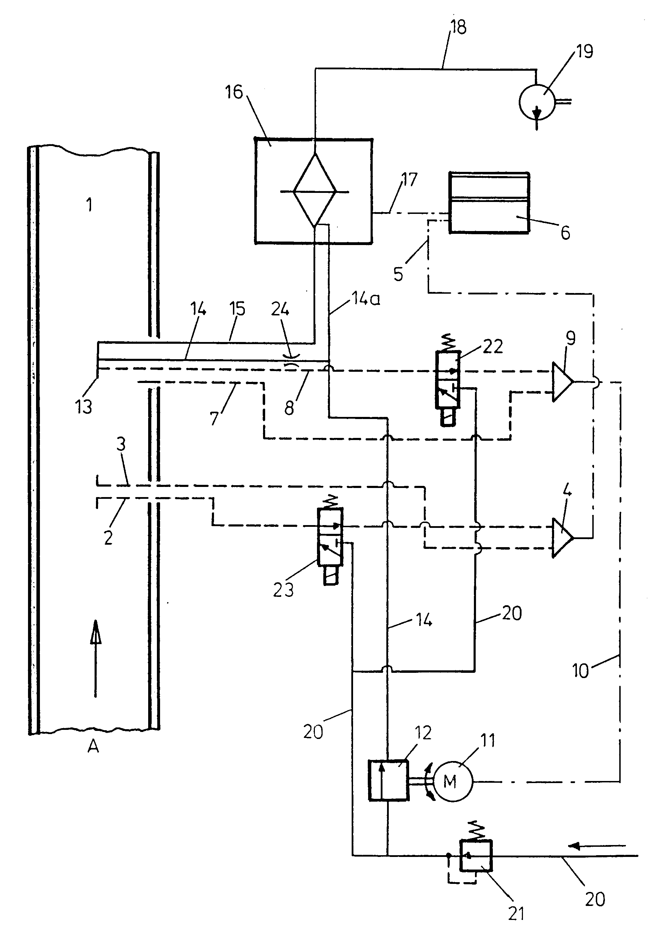

Auf der Zeichnung ist die erfindungsgemäße Einrichtung schematisch dargestellt.

In den mit 1 bezeichneten Kanal, in welchem die mit Staub beladene Abluft in Richtung des Pfeiles A strömt, ragen die Pitotrohre 2 und 3, wobei Rohr 2 gegen die Strömungsrichtung und Rohr 3 in Strömungsrichtung angeordnet ist, welche an einem Differenzdruckmesser 4 angeschlossen sind. Der Differenzdruckmesser 4 ist über die Signalleitungen 5 mit einem allgemein bekannten Rechner 6 verbunden, so daß an dem bzw. durch den Rechner 6 die Abluftmenge in Kubikmeter pro Sekunde abgelesen und/oder registriert werden kann. Weiterhin ragt in den Kanal 1 ein statisches Druckrohr 7 sowie ein Nulldruckrohr 8, welche beide wiederum an einem zweiten Differenzdruckmesser 9 angeschlossen sind. Der Differenzdruckmesser 9 steht über die Signalleitungen 10 mit dem Ventilbetätigungsmittel 11 beispielsweise einem links-rechts drehenden Elektromotor, in Verbindung, so daß das Öffnen oder schließen des Ventils 12 entsprechend den Signalen des Differenzdruckmessers 9 erfolgt. An der in den Kanal 1 ragenden Entnahmedüse 13 sind das Nulldruckrohr 8, ein (Frischluft) Spülrohr 14 und ein (Gemisch) Entnahmerohr 15 angeschlossen. Das Entnahmerohr 15 führt zu einem Staubmeßfilter 16, welcher über die Signalleitungen 17, derart mit dem Rechner 6 in Verbindung steht, daß die im Staubmeßfilter 16 gewogene Staubmenge an dem bzw. durch den Rechner 6 in Milligramm und in Milligramm pro Kubikmeter Abluft abgelesen und/oder registriert werden kann.

Ein Teil der im Kanal 1 befindlichen Abluft wird über Entnahmedüse 13, Entnahmerohr 15, Staubmeßfilter 16, Ansaugleitung 18 von dem Sauggerät 19 angesaugt. Das Sauggerät 19 kann eine allgemeine bekannte Vakuumpumpe sein. Die dargestellte Einrichtung weist Druckluftleitungen 20 auf, die über ein bekanntes Druckminderventil 21, an die Ventile 12, 22 und 23 angeschlossen sind.

In das Spülrohr 14, welches vom Ventil 12 bis zur Entnahmedüse 13 verläuft, ist eine Drossel 24 eingesetzt, vor der ein abgezweigtes Rohr 14a zum Staubmeßfilter 16 führt und dort ständig ein zum Schutz der Meßeinrichtung eingesetztes Titanfilter spült und dieses vor Verschmutzung schützt.

Die Wirkungsweise dieser Einrichtung ist, bei Annahme, daß die Strömungsgeschwindigkeit der Abluft im Kanal 1 gleich Null, das Sauggerät 19 eingeschaltet und (Frischluft) Druckluft in den Druckluftleitungen 20 zur Verfügung steht, folgende:
Das Sauggerät 19 saugt über Ansaugleitung 18 Staubmeßfilter 16, Entnahmerohr 15 Abluft aus Kanal 1 an. Gleichzeitig strömt mit überdruck bei geöffnetem Ventil 12 Frischluft über Spülrohr 14 bis zum Austritt an der Entnahmedüse 13, wodurch im Nulldruckrohr 8 gegenüber dem statischen Druckrohr 7 ein Unterdruck entsteht. Der Differenzdruckmesser 9 "erkennt" diese Druckverhältnisse und gibt über Signalleitungen 10 "Öffnungssignale" an das Ventilbetätigungsmittel 11, welches nunmehr solange das Ventil 12 öffnet bis der Differenzdruck in den Rohren 7 und 8 gleich Null ist. Sobald diese Nulldruckdifferenz erreicht ist, strömt durch das Spülrohr 14 die gleiche Menge Frischluft (Druckluft) wie im Entnahmerohr 15 abgesaugt wird, so daß keine Abluftentnahme aus Kanal 1 erfolgt.

Ist die Abluftströmungsgeschwindigkeit im Kanal 1 größer als Null, dann entsteht im Nulldruckrohr 8 ein überdruck gegenüber dem statischen Druckrohr 7, wodurch der Differenzdruckmesser 9 so lange eine Schließbetätigung des Ventils 12 veranlaßt bis der Differenzdruck zwischen den Rohren 7 und 8 gleich Null ist, wodurch an der Entnahmedüse 13 mit der im Kanal herrschenden Strömungsgeschwindigkeit ein Teilgasstrom abgesaugt wird.

Somit ist sichergestellt, daß mit dieser Einrichtung immer eine geschwindigkeitsgleiche oder isokinetische Entnahme eines Teilgasstromes erfolgt. Ein Teilgasstrom der aus einem Gemisch von Abluft und Frischluft besteht und durch das Sauggerät 19 durch den Staubmeßfilter 16 gesaugt wird. Der im Staubmeßfilter 16 abgeschiedene Staub wird kontinuierlich durch Bestimmung der Masse festgestellt und die Meßwerte dem Rechner 6 zugeführt.

Damit innerhalb dieser Einrichtung keine Kondensatbildung auftritt kann sowohl das Spülrohr 14 als auch das Entnahmerohr 15 über die Temperatur des jeweiligen Taupunktes erhitzt werden.

In einem wählbaren bzw. vorbestimmbaren Zyklus werden durch Öffnen der Ventile 22 und 23 die Rohre 2 und 8 sowie Entnahmedüse 13 durch Ausblasen gereinigt.

## Patentansprüche

1. Einrichtung zum Messen der Staubemission in Kanälen (1) mit aggressiven Stäuben, insbesondere Schornsteinen, mit weicher eine geschwindigkeitsgleiche oder isokinetische Entnahme eines Teilgasstromes erfolgt und der Teilgasstrom zur Herabsetzung des Taupunktes mit Frischluft gemischt über ein Gemischentnahmerohr (15) mittels eines Sauggerätes(19) dem Auswertefilter (16) zugeführt wird, wobei an einer Entnahmedüse (13) ein Nulldruckrohr (8), ein Spülrohr (14) und das Gemischentnahmerohr (15) angeschlossen sind und wobei die Entnahmedüse (13) und ein statisches Druckrohr (7) in den Kanal (1) ragen, so daß zur isokinetischen Entnahme des Teilgasstromes an der Entnahmedüse (13), durch Veränderung der Frischluftmengenzufuhr über ein Steuerventil (12), welches das Spülrohr (14) mit einer Druckluftleitung (20) verbindet und entsprechend den Signalen eines Differenzdruckmessers (9), der mit dem Nulldruckrohr (8) und dem in den Kanal (1) ragenden statischen Druckrohr (7) verbunden ist, betätigbar ist, eine Nulldruckdifferenz geschaffen wird, wobei die Betätigung des Steuerventils (12) durch Ventilbetätigungsmittel (11) erfolgt, und wobei ein gegen die Strömungsrichtung (A) angeordnetes, in den Kanal (1) ragendes Pitotrohr (2) und das Nulldruckrohr (8) sowie die Entnahmedüse (13) in einem einstellbaren Zyklus reinigbar sind, wobei diese Reinigung durch Öffnen zweier Ventile (22 und 23), über die das Pitotrohr (2) bzw. das Nulldruckrohr (8) an die Druckluftleitung (20) angeschlossen sind, und Ausblasen mit Frischluft erfolgt.

2. Einrichtung nach Anspruch 1, dadurch gekennzeichnet, daß das Frischluft führende Spülrohr (14) und das Entnahmerohr (15), welches verdünntes Gemisch aus Frischluft und staubbeladener Abluft führt, über die Temperatur des jeweiligen Taupunktes erhitzt werden.

3. Einrichtung nach Anspruch 1, dadurch gekennzeichnet, daß mittels an sich bekannter 3/2 Wegventile (22, 23) die Reinigung mittels Ausblasen durch Frischluft gesteuert wird.

4. Einrichtung nach Anspruch 1, dadurch gekennzeichnet, daß ein weiterer Differenzdruck an dem an einen Differenzdruckmesser (4) angeschlossenen Pitotrohr (2) und einem weiteren an den Differenzdruckmesser (4) angeschlossenen Rohr (3) als Signal der jeweils herrschenden Gasströmungsgeschwindigkeit im Kanal (1) dem Rechner (6) zugeführt und dort als Abluftmengenwert in Kubikmeter pro Zeiteinheit anzeig- bzw. registrierbar ist.

5. Einrichtung nach Anspruch 1, dadurch gekennzeichnet, daß das Gewicht des auf dem Staubmeßfilter (16) angesammelte Staubes kontinuierlich durch Massenbestimmung festgestellt und der Meßwert dem Rechner (6) zwecks Anzeige und/oder Registrierung des Emissionswertes in Milligramm (Staub) pro Kubikmeter (Abluft) zugeführt wird.

## Claims

1. A device for measuring the dust emission in ducts (1) carrying hazardous dust, especially chimneys, with which a speed-matched or isokinetic removal of a partial gas stream takes place and the partial gas stream, to reduce the point of condensation, mixed with fresh air via a mixture sampling tube (15), is passed by means of a suction apparatus (19) to the evaluation filter (16), in which a zero pressure tube (8), a flushing tube (14) and the mixture sampling tube (15) are connected to a sampling nozzle (13), and in which the sampling nozzle (13) and a static pressure tube (7) project into the duct (1), so that for the isokinetic removal of the partial gas stream in the sampling nozzle (13), by altering the supply of the quantity of fresh air via a control valve (12), which connects the flushing tube (14) with a compressed air line (20) and is able to be actuated according to the signals of a pressure differential meter (9), which is connected with the zero pressure tube (8) and the static pressure tube (7) extending into the duct (1), a zero pressure difference is created, in which the actuation of the control valve (12) takes place by valve actuating means (11), and in which a Pitot tube (2) is arranged against the direction of flow (A) and projecting into the duct (1), and the zero pressure tube (8) and also the sampling nozzle (13) are able to be cleaned in an adjustable cycle, in which this cleaning takes place by opening two valves (22 and 23), via which the Pitot tube (2) or respectively the zero pressure tube (8) are connected to the compressed air line (20), and by blowing out with fresh air.

2. A device according to Claim 1, characterised in that the flushing tube (14) carrying the fresh air and the sampling tube (15), which carries a diluted mixture of fresh air and exhaust air charged with dust, are heated over the temperature of the respective points of condensation.

3. A device according to Claim 1, characterised in that the cleaning by blowing out with fresh air is controlled by means of 3/2-way valves (22, 23), known per se.

4. A device according to Claim 1, characterised in that a further pressure differential on the Pitot tube (2), connected to a pressure differential meter (4), and on a further tube (3) connected to the pressure differential meter (4), is passed to the computer (6) as a signal of the respectively prevailing gas flow speed in the duct (1) and is able to be displayed or respectively registered there as exhaust air quantity value in cubic metres per unit of time.

5. A device according to Claim 1, characterised in that the weight of the dust accumulated on the dust measurement filter (16) is established continuously by determining the mass and the measurement value is passed to the computer (6) for the purpose of displaying and/or registering the emission value in milligrammes (dust) per cubic metre (exhaust air).

## Revendications

1. Dispositif de mesure de l'émission de poussières dans des conduits (1) contenant des poussières agressives, en particulier dans des cheminées, avec lequel on procède à un prélèvement à vitesse constante, ou isocinétique, d'une partie du courant de gaz, et la partie du courant de gaz, mélangée avec de l'air frais pour abaisser son point de rosée, est envoyée au moyen d'un appareil d'aspiration (19) et par l'intermédiaire d'un tube (15) de prélèvement du mélange, au filtre de mesure (16), un tube de nettoyage (14) et le tube (15) de prélèvement du mélange étant raccordés à une buse de prélèvement (13), la buse de prélèvement (13) et un tube de pression statique (7) faisant saillie dans le conduit (1), de telle façon que, pour le prélèvement isocinétique de la partie du courant de gaz à la buse de prélèvement (13), on crée une différence de pression nulle en modifiant l'arrivée de la quantité d'air frais au moyen d'une vanne commandée (12) reliée par le tube d'aspersion (14) avec une conduite d'air comprimé (20) et actionnée en fonction de signaux reçus d'un appareil de mesure (9) de la pression différentielle, appareil qui est relié avec le tube de pression zéro (8) et le tube de pression statique (7) en saillie dans le conduit (1), l'actionnement de la vanne commandée (12) se faisant au moyen d'un moyen de commande de vanne (11), et étant entendu qu'un tube de Pitot (2), disposé dans le sens opposé à celui de l'écoulement (A) et en saillie dans le conduit (1), et le tube de pression zéro (8), ainsi que la buse de prélèvement (13) peuvent être nettoyés au cours d'un cycle programmable, ce nettoyage se faisant par l'ouverture de deux distributeurs (22 et 23), raccordant le tube de Pitot (2) et le tube de pression zéro (8) avec la conduite d'air comprimé (20), et par soufflage avec de l'air frais.

2. Dispositif suivant la revendication 1, caractérisé en ce que le tube de nettoyage (14), amenant de l'air frais, et le tube de prélèvement (15), conduisant le mélange dilué composé d'air frais et de fumées chargées de poussières, sont chaque fois chauffés au-dessus de la température du point de rosée correspondant.

3. Dispositif suivant la revendication 1, caractérisé en ce que le nettoyage par soufflage avec de l'air frais est commandé par des distributeurs à passage 3/2, connus en eux-même, (22, 23)

4. Dispositif suivant la revendication 1, caractérisé en ce qu'une autre pression différentielle sur le tube de Pitot (2), raccordé à l'appareil de mesure (4) de la pression différentielle, et sur un autre tube (3), raccordé au appareil de mesure (4) de pression différentielle, est envoyée au calculateur (6) et peut être affichée oiu enregistrée comme un signal de la vitesse d'écoulement de gaz régnant chaque fois dans le conduit (1).

5. Dispositif suivant la revendication 1, caractérisé en ce que le poids de la poussière collectée dans le filtre de mesure d'empoussièrement (16) est déterminé en continu par détermination de sa masse, et en ce que la valeur de la mesure est envoyée au calculateur (6) pour affichage et/ou enregistrement de la valeur de l'émission, en milligrammes (poussière) par mètre-cube (fumées).
